# EUROPEAN PATENT SPECIFICATION

(11) **EP 3 608 176 B1**
(45) Date of publication and mention of the grant of the patent: **02.06.2021**
(21) Application number: 18188270.5
(22) Date of filing: 09.08.2018
(51) Int. Cl.: B60R 16/00, B60K 17/04, F16H 57/02, B62M 7/12

(54) **POWER ASSEMBLY OF ELECTRIC SCOOTER**
ANTRIEBSANORDNUNG EINES ELEKTROROLLERS
ENSEMBLE D'ALIMENTATION DE SCOOTER ÉLECTRIQUE

(43) Date of publication of application: 12.02.2020
(73) Proprietor: Fukuta Electric & Machinery Co., Ltd., 429 Taichung City (TW)
(72) Inventor: CHANG, CHIN FENG, 428 Taichung City (TW); KE, HUNG CHUN, 509 Changhua County (TW)
(74) Representative: Cabinet Chaillot

(56) References cited:
- CN-A- 106 143 777
- CN-U- 204 915 979
- JP-A- 2006 353 045
- US-A1- 2011 290 578
- US-A1- 2017 314 643
- US-A1- 2017 373 558

## Description

### BACKGROUND OF THE INVENTION

### 1. Technical Field

The present invention relates to an electric scooter, and more particularly to a power assembly of an electric scooter.

### 2. Description of Related Art

Typically, a conventional electric scooter is driven by a motor, and a gearbox is provided to be connected to the motor to increase torque or reduce speed of the motor. In view of an optimal working condition of the motor, the gearbox must be precisely worked according to the output of the motor. In order to achieve this purpose, a controller is provided to sense the outputs of the motor and the gearbox and control the motor accordingly.

In the conventional electric scooter, the motor, the gearbox, and the controller are three independent devices mounted in the electric scooter. It takes a lot of space to mount and connect the motor, the gearbox, and the controller.

Besides, there are a lot of wires to connect the motor, the gearbox, and the controller for sensing and controlling. Usually, these wires are exposed and disorder, and they are bad for mounting and repairing.
JP 2006 353045 A discloses a power assembly of the electric scooter according to the preamble of claim 1.

### BRIEF SUMMARY OF THE INVENTION

In view of the above, the primary objective of the present invention is to provide a power assembly of an electric scooter, which is smaller than the prior art and has no exposed wires The present invention relates to a a power assembly of an electric scooter as recited in claim 1. Further embodiments are defined in the remaining dependent claims.

The power assembly of the electric scooter of the present invention integrates the motor, the gearbox, and the controller into a single case, and let the wires, which connects the motor, the gearbox, and the controller, run in the case to reduce the size and make the assembling task easier.

In order to achieve the objective of the present invention, a power assembly of an electric scooter, as defined in claim 1, includes a case having a base, wherein the base is provided with a separating layer to divide a space in the base into a first space and a second space; an electric motor, which is provided in the case, having an output shaft and a driving gear connected to the output shaft, wherein the driving gear is received in the first space of the base; a driven gear, which is received in the first space of the base and mesh with the driving gear, wherein a gear shaft is connected to the driven gear, and the gear shaft has an end extending out of the case; and a controller provided in the second space of the base and electrically connected to the electric motor.

As a result, the electric motor, the driven gear, and the controller are integrated in the case to reduce the size. Besides, the controller is electrically connected to the electric motor, so that both the controller and the electric motor are received in the case and the wires for connecting the controller and the electric motor are received in the case as well to make the assembling task easier.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of a preferred embodiment of the present invention;
FIG. 2 is an exploded view of the preferred embodiment of the present invention;
FIG. 3 is a perspective diagram of the base of the preferred embodiment of the present invention;
FIG. 4 is an exploded view of the base and the connecting base of the preferred embodiment of the present invention;
FIG. 5 is a perspective of the base and the connecting base in combination of the preferred embodiment of the present invention;
FIG. 6 is an exploded view of the case, the controller, and the lid of the preferred embodiment of the present invention; and
FIG. 7 is a perspective of the case, the controller, and the lid in combination of the preferred embodiment of the present invention.

### DETAILED DESCRIPTION OF THE INVENTION

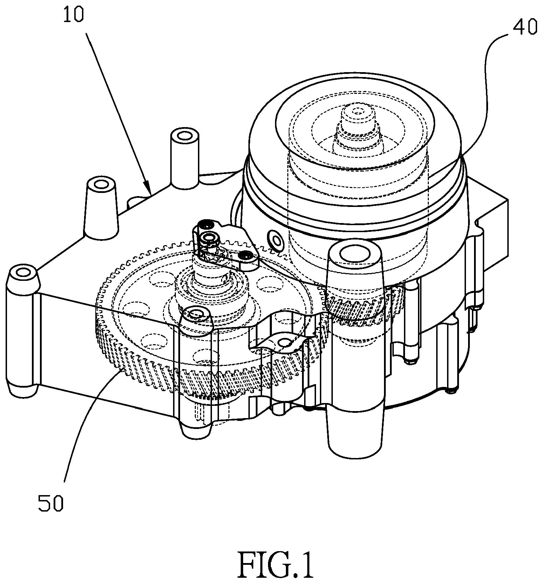

As shown in FIG. 1, a power assembly of an electric scooter includes a case 10, in which an electric motor 40, a driven gear 50, and a controller 80 are received.

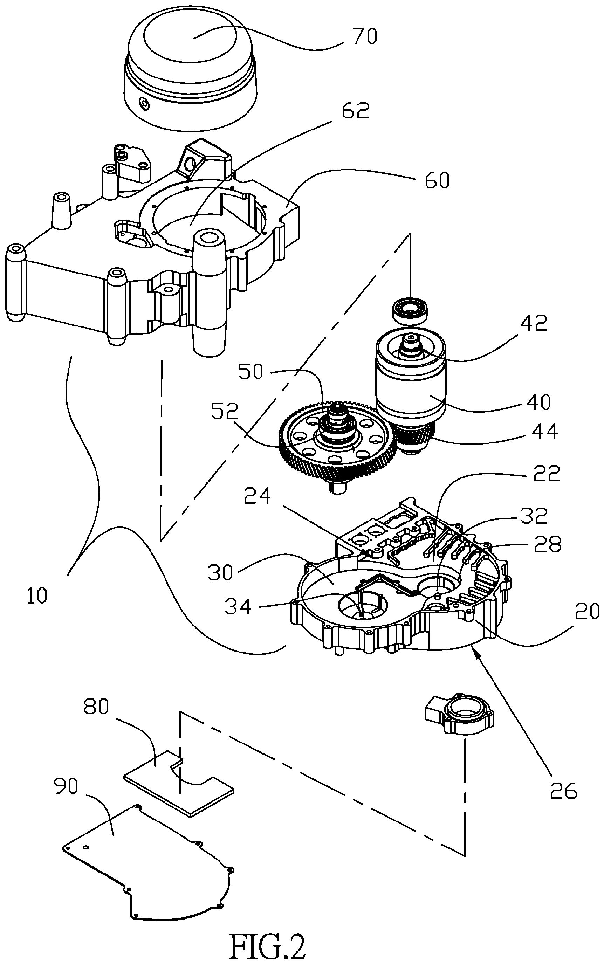

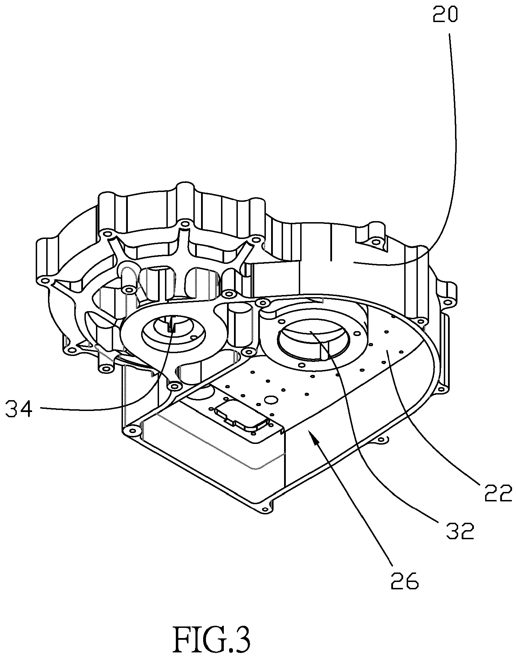

As shown in FIG. 2 and FIG. 3, the case 10 has a base 20, in which a separating layer 22 is provided to divide a space in the base 20 into a first space 24 and a second space 26. The first space 24 is divided into a first gear room 28 and a second gear room 30, and the first and the second gear rooms 28, 30 are communicated with each other. The base 20 is provided with a first axial bore 32 communicated with the first gear room 28, and a second axial bore 34 communicated with the second gear room 34, and both the first and the second axial bores 32, 34 are opened at opposite ends.

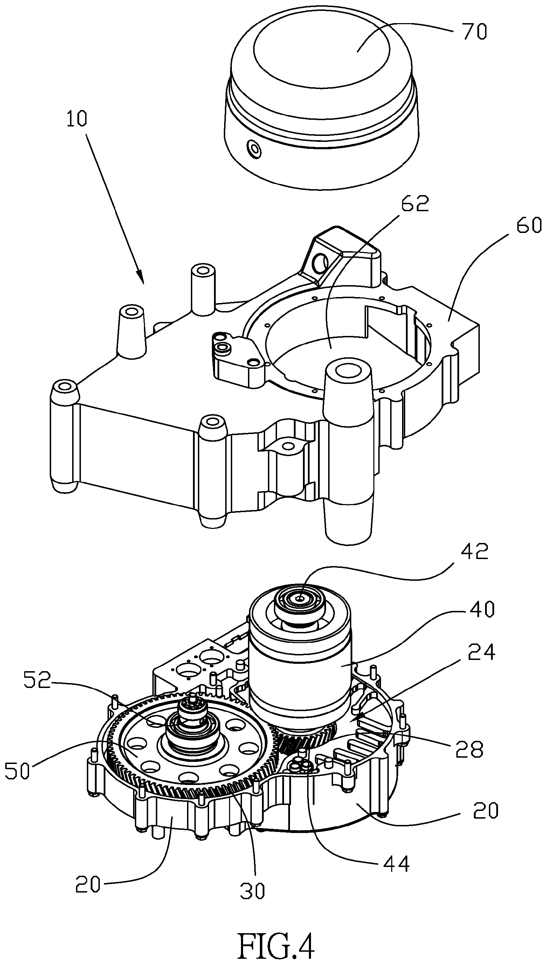

As shown in FIG. 2 and FIG. 4, the electric motor 40 has an output shaft 42 and a driving gear 44 fixed to the output shaft 42. The electric motor 40 is mounted in the case 10 with the driving gear 44 in the first gear room 28 of the first space 24 of the base 20 and the output shaft 42 passing through the first axial bore 32.

The driven gear 50 is fixed to a gear shaft 52, wherein the driven gear 50 is received in the second gear room 30 of the first space 24 to mesh with the driving gear 44, and the gear shaft 52 extends out of the case 10 through the second axial bore 34.

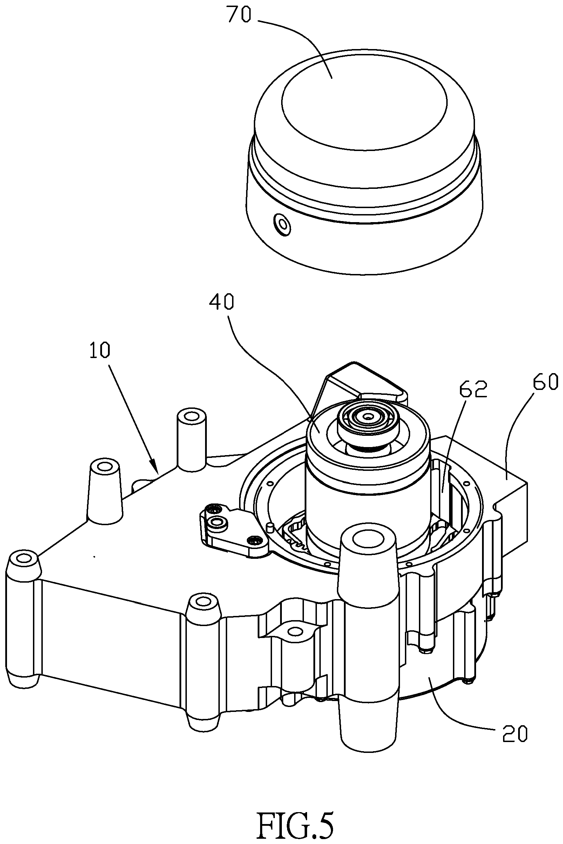

As shown in FIGS. 2, 4, and 5, the case 10 further has a connecting base 60 to be coupled to the base 20 at a side with the first space 24. The connecting base 60 is provided with a through hole 62 for the electric motor 40 passing through. The case 10 further has a lid 70 coupled to the connecting base 60 to cover the electric motor 40 and seal the through hole 62. The gear shaft 52 is pivoted on the connecting base 60.

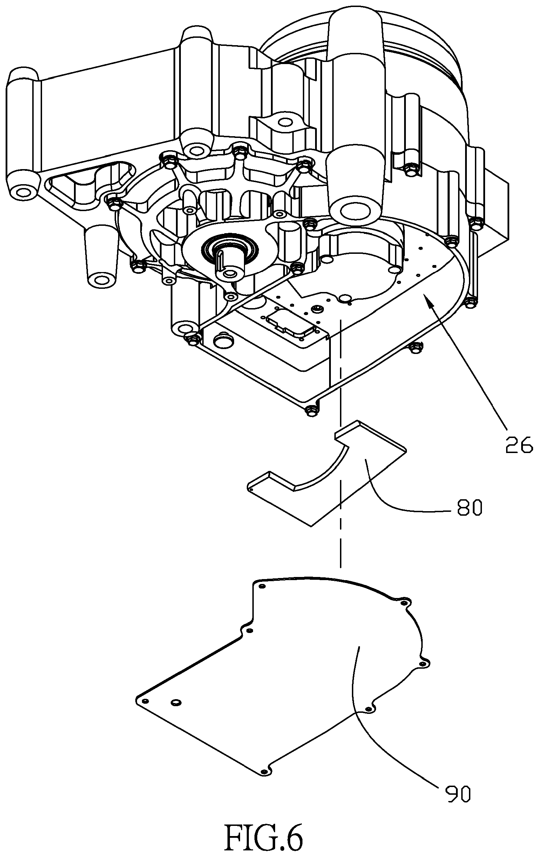

As shown in FIG. 2 and FIG. 6, the controller 80 is mounted in the second space 26 of the base 20 and electrical connected to the electric motor. The case 10 further has a cover 90 coupled to the base 20 at a side with the second space 26 to seal the second space 26.

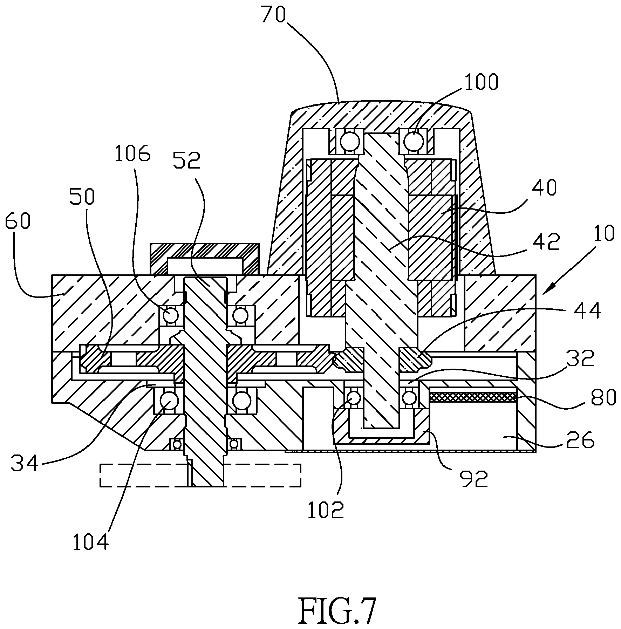

As shown in FIG. 7, a shaft lid 92 is received in the second space 26 and fixed to the base 20 to cover the output shaft 42 of the electric motor 40 and seal the first axial bore 32. The controller 80 is beside the shaft lid 92. A bearing 100 is provided on an interior side of the lid 70, and a bearing 102 is provided in the first axial bore 32. Both the bearings 100, 102 are fitted to the output shaft 42 of the electric motor 40 to make the output shaft 42 stably turn. A bearing 104 is provided in the second axial bore 34, and a bearing 106 is provided on the connecting base 60. Both the bearings 104, 106 are fitted to the gear shaft 52 of the driven gear 50 to make the driven gear 50 stably turn. A pulley 110 is connected to the gear shaft 52 and left out of the case 10 to transmit the power of the electric motor 40 out.

The present invention integrates the electric motor 40, the driven gear 50, and the controller 80 in the case 10, so that the size of the present invention is smaller than the prior art. In addition, wires (not shown), which electrically connected the controller 80 and the electric motor 40 will run in the case 10 to make the assembling task easier.

It must be pointed out that the embodiments described above are only some preferred embodiments of the present invention, as defined by the appended claims.

## Claims

1. A power assembly of an electric scooter, comprising:
a case (10) having a base (20), wherein the base (20) is provided with a separating layer (22) to divide a space in the base (20) into a first space (24) and a second space (26);
an electric motor (40), which is provided in the case (10), having an output shaft (42) and a driving gear (44) connected to the output shaft (42), wherein the driving gear (44) is received in the first space (24) of the base (20);
a driven gear (50), which is received in the first space (24) of the base (20) and meshed with the driving gear (44), wherein a gear shaft (52) is connected to the driven gear (50), and the gear shaft (52) has an end extending out of the case (10); and
a controller (80) provided in the second space (26) of the base (20) and electrically connected to the electric motor (40);wherein the first space (24) is divided into a first gear room (28) and a second gear room (30); the driving gear (44) of the electric motor (40) is received in the first gear room (28), and the driven gear (50) is received in the second gear room (30); the power assembly being **characterised in that**:
the base (20) is provided with a first axial bore (32) communicated with the first gear room (28) and a second axial bore (32) communicated with the second gear room (30); the output shaft (42) of the electric motor (40) passes through the first axial bore (32), and the gear shaft of the driven gear (50) passes through the second axial bore (32);a shaft lid (92) received in the second space (26) of the base (20) and fixed to the base (20) to cover the output shaft (42) of the electric motor (40).

2. The power assembly of the electric scooter of claim 1, further comprising a cover (90) coupled to the base (20) to seal the second space (26).

3. The power assembly of the electric scooter of claim 1, wherein the case further includes a connecting base (60) coupled to the base (20) at a side of the first space (24); the connecting base (60) is provided with a through hole (62) for the electric motor (40) passing through.

4. The power assembly of the electric scooter of claim 3, further comprising a lid (70) coupled to the connecting base (60) to cover the electric motor (40) and seal the through hole (62).

## Patentansprüche

1. Antriebsanordung eines Elektrorollers, umfassend:
- ein Gehäuse (10) mit einer Basis (20), wobei die Basis (20) eine Trennschicht (22) zum Trennen eines Raums in der Basis (20) in einen ersten Raum (24) und einen zweiten Raum (26) aufweist;
- einen Elektromotor (40), der in dem Gehäuse (10) angeordnet ist, der eine Abtriebwelle (42) und ein Antriebrad (44) aufweist, das an die Abtriebwelle (42) angeschlossen ist, wobei das Antriebrad (44) in dem ersten Raum (24) der Basis (20) aufgenommen ist;
- ein Abtriebsrad (50), das in dem ersten Raum (24) der Basis (20) aufgenommen ist und mit dem Antriebrad (44) ineinandergreift, wobei eine Getriebewelle (52) an das Abtriebsrad (50) angeschlossen ist und die Getriebewelle (52) ein Ende aufweist, das sich aus dem Gehäuse (10) erstreckt; und
- einen Controller (80), der in dem zweiten Raum (26) der Basis (20) angeordnet und elektrisch an den Elektromotor (40) angeschlossen ist; wobei der erste Raum (24) in einen ersten Getrieberaum (28) und einen zweiten Getrieberaum (30) unterteilt ist; wobei das Antriebrad (44) des Elektromotors (40) in dem ersten Getrieberaum (28) aufgenommen ist und das Abtriebsrad (50) in dem zweiten Getrieberaum (30) aufgenommen ist; wobei die Antriebsanordnung **dadurch gekennzeichnet ist, dass**:
die Basis (20) eine erste axiale Bohrung (32), die mit dem ersten Getrieberaum (28) in Verbindung ist, und eine zweite axiale Bohrung (32), die mit dem zweiten axialen Getrieberaum (30) in Verbindung ist, aufweist; wobei die Abtriebwelle (42) des Elektromotors (40) durch die erste axiale Bohrung (32) hindurchtritt und die Getriebewelle des Abtriebsrads (50) durch die zweite axiale Bohrung (32) hindurchtritt; einen Shaftdeckel (92), der in dem zweiten Raum (26) der Basis (20) aufgenommen und an der Basis (20) befestigt ist, um die Abtriebwelle (42) des Elektromotors (40) abzudecken.

2. Antriebsanordnung des Elektrorollers gemäß Anspruch 1, weiterhin umfassend eine Abdeckung (90), die an die Basis (20) gekoppelt ist, um den zweiten Raum (26) zu versiegeln.

3. Antriebsanordnung des Elektrorollers gemäß Anspruch 1, wobei das Gehäuse weiterhin eine Anschlussbasis (60) enthält, die an die Basis (20) an einer Seite des ersten Raums (24) gekoppelt ist; die Anschlussbasis (60) eine Durchgangsbohrung (62) aufweist, durch die der Elektromotor (40) hindurchtritt.

4. Antriebsanordnung des Elektrorollers gemäß Anspruch 3, weiterhin umfassend einen Deckel (70), der an die Anschlussbasis (60) gekoppelt ist, um den Elektromotor (40) abzudecken und die Durchgangsbohrung (62) zu versiegeln.

## Revendications

1. Ensemble de puissance d'un scooter électrique, comprenant :
un carter (10) ayant une base (20), la base (20) comportant une couche de séparation (22) pour diviser un espace dans la base (20) en un premier espace (24) et un second espace (26) ;
un moteur électrique (40), qui est disposé dans le carter (10), ayant un arbre de sortie (42) et un engrenage d'entraînement (44) relié à l'arbre de sortie (42), l'engrenage d'entraînement (44) étant reçu dans le premier espace (24) de la base (20) ;
un engrenage entraîné (50), qui est reçu dans le premier espace (24) de la base (20) et engrené avec l'engrenage d'entraînement (44), un arbre de transmission (52) étant relié à l'engrenage entraîné (50), et l'arbre de transmission (52) ayant une extrémité s'étendant hors du carter (10) ; et
un dispositif de commande (80) disposé dans le second espace (26) de la base (20) et relié électriquement au moteur électrique (40) ; le premier espace (24) étant divisé en une première chambre d'engrenage (28) et une seconde chambre d'engrenage (30) ; l'engrenage d'entraînement (44) du moteur électrique (40) étant reçu dans la première chambre d'engrenage (28), et l'engrenage entraîné (50) étant reçu dans la seconde chambre d'engrenage (30) ; l'ensemble de puissance étant **caractérisé par le fait que** :
la base (20) comporte un premier alésage axial (32) en communication avec la première chambre d'engrenage (28) et un second alésage axial (32) en communication avec la seconde chambre d'engrenage (30) ; l'arbre de sortie (42) du moteur électrique (40) passe à travers le premier alésage axial (32), et l'arbre de transmission de l'engrenage entraîné (50) passe à travers le second alésage axial (32) ; un couvercle d'arbre (92) est reçu dans le second espace (26) de la base (20) et fixé à la base (20) pour recouvrir l'arbre de sortie (42) du moteur électrique (40) .

2. Ensemble de puissance du scooter électrique selon la revendication 1, comprenant en outre un capot (90) couplé à la base (20) pour sceller le second espace (26).

3. Ensemble de puissance du scooter électrique selon la revendication 1, dans lequel le carter comprend en outre une base de liaison (60) couplée à la base (20) d'un côté du premier espace (24) ; la base de liaison (60) comporte un trou traversant (62) pour que le moteur électrique (40) y passe à travers.

4. Ensemble de puissance du scooter électrique selon la revendication 3, comprenant en outre un couvercle (70) couplé à la base de liaison (60) pour recouvrir le moteur électrique (40) et sceller le trou traversant (62).
